# EUROPEAN PATENT APPLICATION

(11) **EP 3 912 846 A1**
(43) Date of publication of application: **24.11.2021**
(21) Application number: 20806644.9
(22) Date of filing: 13.05.2020
(51) Int. Cl.: B60L 15/00, B60K 17/06, B60K 17/12

(54) **ELECTRIC DRIVE DEVICE FOR VEHICLE**

(30) Priority: 13.05.2019 JP 2019090931; 31.03.2020 JP 2020065298
(71) Applicant: Aisin Corporation, Kariya-shi, Aichi-ken 448-8650 (JP)
(72) Inventor: YOSHIMI, Takuya, Kariya-shi, Aichi 448-8650 (JP); SAITO, Daisuke, Kariya-shi, Aichi 448-8650 (JP)
(74) Representative: Kramer Barske Schmidtchen Patentanwälte PartG mbB
(86) International application number: PCT/JP2020/019165
(87) International publication number: WO 2020/230829

(57) **Abstract**

In an electric drive device for a vehicle, when a distance between two portions of a transfer shaft supported by two supporting parts of a drive housing and a distance between two portions of an input shaft supported by two supporting parts of a power transfer housing each are a first distance, one of the input shaft and the transfer shaft that has a longer first distance is one shaft, the other one of the input shaft and the transfer shaft that has a shorter first distance is the other shaft, one of the drive housing and the power transfer housing that supports the one shaft is one housing, and the other one of the drive housing and the power transfer housing that supports the other shaft is the other housing, the one shaft extends toward the other shaft, crossing a first central axis, and a coupling part is accommodated in the other housing.

## Description

### TECHNICAL FIELD

The present invention relates to an electric drive device for a vehicle.

### BACKGROUND ART

Conventionally, there is known an electric drive device for a vehicle that includes a motor, a gear mechanism that performs speed change, etc., a differential gear, and a drive shaft, in which the motor is disposed on one side relative to the differential gear, the gear mechanism is disposed on the other side, and power of the motor is transferred to the gear mechanism through a through drive shaft.

### CITATIONS LIST

### PATENT LITERATURE

Patent Literature 1: EP 3501867 A1

### SUMMARY OF INVENTION

### TECHNICAL PROBLEMS

In an electric drive device for a vehicle of this type, it is assumed that the electric drive device for a vehicle is configured by forming a power transfer unit including a gear mechanism and a power transfer housing that accommodates the gear mechanism, and a drive unit including a motor and a drive housing that accommodates the motor, and by mounting the power transfer unit and the drive unit on an axle case that accommodates a differential gear and a drive shaft, from both sides of the axle case. In that case, it is assumed that a through drive shaft is divided in order to perform test evaluation for each of the power transfer unit and the drive unit before mounting the power transfer unit and the drive unit on the axle case, or for a reason for mounting, etc., and for example, in a coupling part of the divided through drive shafts, swing occurring due to rotation of the through drive shafts may become relatively large depending on the position or structure of the coupling part, and vibration occurring in the electric drive device for a vehicle due to the swing may become relatively large.

Hence, one problem of the present invention is to obtain an electric drive device for a vehicle that, for example, suppresses swing occurring in a coupling part due to rotation of a through drive shaft, by which occurrence of vibration is easily suppressed.

### SOLUTIONS TO PROBLEMS

An electric drive device for a vehicle of the present invention includes, for example, an axle case; a drive shaft that is accommodated in the axle case and is rotatable about a first central axis; a motor that is located on a first direction side relative to the axle case and has a motor shaft that rotates about a second central axis extending in the first direction, the first direction side intersecting an axial direction of the first central axis; a first gear mechanism including an input shaft, at least a part of which is located on an opposite direction side to the first direction relative to the axle case, and to which power is inputted from the motor shaft, the input shaft being rotatable about a third central axis extending in the first direction; an output shaft that is rotatable about a fourth central axis arranged so as to be parallel to the third central axis and spaced from the third central axis; and a plurality of gears that are interposed between the input shaft and the output shaft and that transfer the power; a differential gear that is accommodated in the axle case and coupled to the drive shaft and the output shaft, and transfers the power from the output shaft to the drive shaft; a through drive shaft including a transfer shaft, at least a part of which is located on the first direction side relative to the axle case, and to which power is inputted from the motor shaft; the input shaft; and a coupling part that couples together the transfer shaft and the input shaft, the through drive shaft being rotatable about a third central axis extending in the first direction; a drive unit including the motor; the transfer shaft; and a drive housing that accommodates the motor and the transfer shaft and has two supporting parts that support the transfer shaft so as to be rotatable about the third central axis, the drive unit being detachably mounted on the axle case and extending in the first direction from the axle case; and a power transfer unit including the first gear mechanism; and a power transfer housing that accommodates the first gear mechanism and includes two supporting parts that support the input shaft so as to be rotatable about the third central axis, the power transfer unit being detachably mounted on the axle case and extending in an opposite direction to the first direction from the axle case, and when a distance between two portions of the transfer shaft supported by the two supporting parts of the drive housing and a distance between two portions of the input shaft supported by the two supporting parts of the power transfer housing each are a first distance, one of the input shaft and the transfer shaft that has a longer first distance is one shaft, an other one of the input shaft and the transfer shaft that has a shorter first distance is an other shaft, one of the drive housing and the power transfer housing that supports the one shaft is one housing, and an other one of the drive housing and the power transfer housing that supports the other shaft is an other housing, the one shaft extends toward the other shaft, crossing the first central axis, and the coupling part is accommodated in the other housing.

### ADVANTAGEOUS EFFECTS OF INVENTION

According to the electric drive device for a vehicle of an embodiment of the present invention, comparing to a configuration in which the other shaft with a shorter first distance extends toward the one shaft with a longer first distance, crossing the first central axis, and the coupling part is accommodated in the one housing, swing at an end part on a coupling part side of the one shaft with a longer first distance is easily suppressed. Namely, the effect of suppressing swing occurring in the coupling part due to rotation of the through drive shaft is high. Thus, the electric drive device for a vehicle that easily suppresses occurrence of vibration can be obtained.

### BRIEF DESCRIPTION OF DRAWINGS

FIG. 1 is an illustrative plan view of an electric drive device for a vehicle of a first embodiment.
FIG. 2 is an illustrative diagram showing a schematic configuration of the electric drive device for a vehicle of the first embodiment.
FIG. 3 is an illustrative diagram showing a schematic configuration of an electric drive device for a vehicle of a second embodiment.

### DESCRIPTION OF EMBODIMENTS

Illustrative embodiments of the present invention are disclosed below. Note that in this specification, ordinal numbers are used to distinguish between components, parts, etc., and do not indicate position in a series or priority. Note also that a plurality of embodiments shown below include the same components. The same components are given common reference signs and an overlapping description is omitted.

### <First Embodiment>

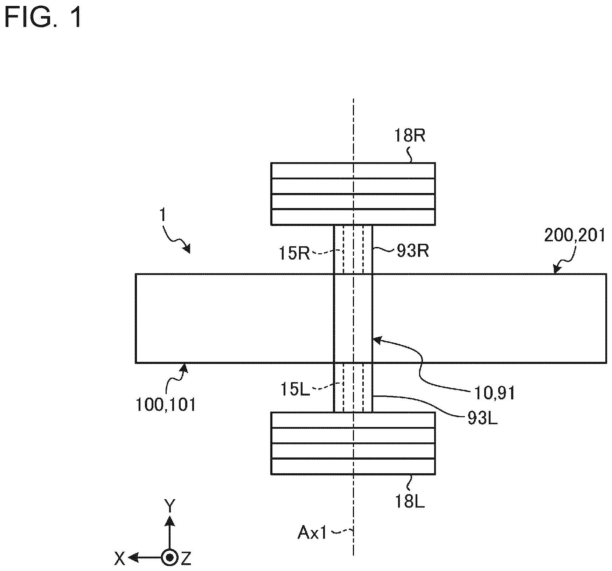

FIG. 1 is an illustrative plan view of an electric drive device for a vehicle 1 of the present embodiment. The electric drive device for a vehicle 1 is provided on a vehicle and rotationally drives wheels 18L and 18R of the vehicle. Note that in the following description, for convenience, three directions orthogonal to each other are defined. An X-direction is the same as a front direction of a vehicle front-rear direction, a Y-direction goes along a vehicle width direction, and a Z-direction is the same as an up direction of a vehicle up-down direction. The electric drive device for a vehicle 1 is also referred to as an electric axle device.

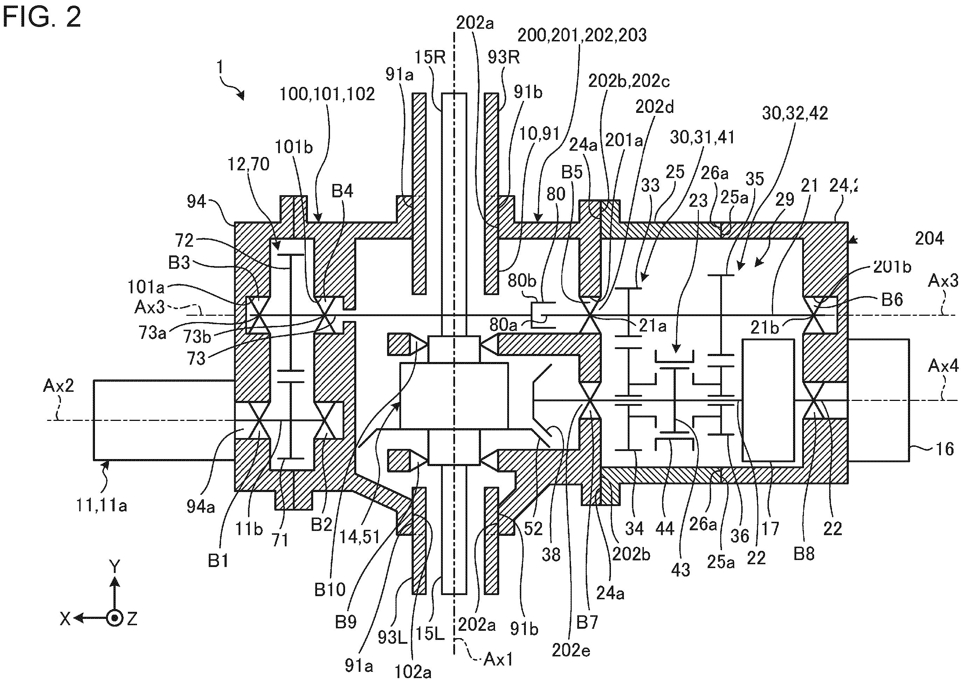

FIG. 2 is an illustrative diagram showing a schematic configuration of the electric drive device for a vehicle 1 of the embodiment. As shown in FIG. 2, the electric drive device for a vehicle 1 includes an axle case 10, a motor 11, a connection mechanism 12, a transmission 13, a differential gear 14, drive shafts 15L and 15R, a parking brake 16, and a parking lock gear 17. In the electric drive device for a vehicle 1, power outputted from the motor 11 is transferred to the drive shafts 15L and 15R through the connection mechanism 12, the transmission 13, and the differential gear 14. By this, the wheels 18L and 18R fixed to the drive shafts 15L and 15R rotate.

In addition, as shown in FIGS. 1 and 2, the electric drive device for a vehicle 1 includes a drive unit 100 and a power transfer unit 200.

As shown in FIG. 2, the drive unit 100 includes the motor 11, the connection mechanism 12, and a drive housing 101.

The drive unit 100 is detachably mounted on the axle case 10, with the drive unit 100 located on an X-direction side, i.e., a front-direction side, of the axle case 10. The drive unit 100 extends in the X-direction, i.e., the front direction, from the axle case 10. In other words, the drive unit 100 protrudes in the X-direction from the axle case 10. The X-direction is an example of a first direction.

The power transfer unit 200 includes the transmission 13, the differential gear 14, the parking brake 16, the parking lock gear 17, and a power transfer housing 201. The power transfer unit 200 is detachably mounted on the axle case 10, with the power transfer unit 200 located on an opposite side to the X-direction, i.e., a rear-direction side, of the axle case 10.

The power transfer unit 200 extends in an opposite direction to the X-direction, i.e., a rear direction, from the axle case 10. In other words, the power transfer unit 200 protrudes in the opposite direction to the X-direction from the axle case 10.

The drive unit 100 and the power transfer unit 200 are mounted on the axle case 10 independently of each other. In other words, the drive unit 100 and the power transfer unit 200 are mounted on the axle case 10 separately from each other. Namely, the motor 11 and the transmission 13 are mounted on the axle case 10 independently of each other.

The axle case 10 is a rigid axle case, and accommodates the differential gear 14 and the drive shafts 15L and 15R.

The axle case 10 includes a combination of a plurality of members. Specifically, the axle case 10 has a base member 91 and two cylindrical members 93R and 93L. The base member 91 is formed in frame form (endless form), and has therein an accommodating room that accommodates the differential gear 14. In addition, the two cylindrical members 93R and 93L extend from the base member 91 in the vehicle width direction and in opposite directions to each other. Specifically, the cylindrical member 93R extends in the Y-direction from the base member 91, and the cylindrical member 93L extends in an opposite direction to the Y-direction from the base member 91. The two cylindrical members 93R and 93L are fixed to the base member 91 by coupling devices such as screws or bolts, welding, etc. The two cylindrical members 93R and 93L have accommodating rooms that accommodate the drive shafts 15L and 15R, respectively. Note that means for fixing the members of the axle case 10 is not limited to those described above. The axle case 10 is also referred to as a case or a rigid axle.

In addition, the base member 91 has two mating surfaces 91a and 91b. The mating surface 91a is an edge surface in the X-direction, i.e., the front direction, and faces in the X-direction. The mating surface 91b is an edge surface in the opposite direction to the X-direction, i.e., the rear direction, and faces in the opposite direction to the X-direction. The mating surfaces 91a and 91b are planar.

The drive shafts 15L and 15R extend in the Y-direction, i.e., the vehicle width direction. The drive shafts 15L and 15R are disposed on a straight line in the Y-direction (vehicle width direction) with spacing therebetween. The differential gear 14 is disposed between the drive shafts 15L and 15R. The drive shafts 15L and 15R are accommodated in the axle case 10, and are supported by the axle case 10 with bearings therebetween so as to be rotatable about a central axis Ax1. The central axis Ax1 extends in the Y-direction, i.e., the vehicle width direction. The central axis Ax1 is an example of a first central axis.

The drive housing 101 of the drive unit 100 has a base member 102 and a cover member 94. The base member 102 has a mating surface 102a. The mating surface 102a is an edge surface in the opposite direction to the X-direction, i.e., the rear direction, and faces in the opposite direction to the X-direction. The mating surface 102a overlaps the mating surface 91a of the axle case 10. The base member 102 is fixed to the base member 91 by coupling devices such as screws or bolts on the X-direction side, i.e., the front-direction side, of the base member 91 of the axle case 10, with the base member 102 overlapping the base member 91. The base member 102 is provided with a part of an accommodating room that accommodates the connection mechanism 12 and a part of an accommodating room that accommodates the differential gear 14, etc. The cover member 94 is fixed to the base member 102 by coupling devices such as screws or bolts on the X-direction side, i.e., the front-direction side, of the base member 102, with the cover member 94 overlapping the base member 102. The accommodating room that accommodates the connection mechanism 12 is provided between the base member 102 and the cover member 94.

The motor 11 has a motor case 11a and a motor shaft 11b. The motor case 11a is supported (fixed) by the axle case 10. Specifically, the motor case 11a is detachably mounted on the cover member 94 by screws, etc. Namely, the motor 11 is detachably mounted on the axle case 10 with the cover member 94 and the base 101 member therebetween. The motor case 11a accommodates therein a part of the motor shaft 11b, a rotor (not shown) that rotates together with the motor shaft 11b, and a stator (not shown) that encloses an outer circumference of the rotor.

The motor shaft 11b is supported by the motor case 11a so as to be rotatable about a central axis Ax2. The motor shaft 11b is inserted into an opening part 94a provided in the cover member 94 and extends within the cover member 94. Namely, the motor shaft 11b passes through the opening part 94a. The central axis Ax2 extends in the X-direction (vehicle front-rear direction), i.e., a direction orthogonal to (intersecting) an axial direction of the central axis Ax1. For example, the central axis Ax2 extends in the vehicle front-rear direction. In addition, a portion of the motor shaft 11b protruding from the motor case 11a is rotatably supported by two bearings B1 and B2. The two bearings B1 and B2 are arranged in the X-direction with spacing therebetween. The two bearings B1 and B2 are supported by the cover member 94. Namely, the portion of the motor shaft 11b protruding from the motor case 11a is rotatably supported by the cover member 94 with the two bearings B 1 and B2 therebetween.

The motor 11 gives torque (power) about the central axis Ax2 to the motor shaft 11b by supplying electric power thereto. Namely, the motor shaft 11b outputs power. The power outputted from the motor shaft 11b of the motor 11 is inputted to the transmission 13 through the connection mechanism 12.

The connection mechanism 12 includes a single gear 70. The gear 70 includes a first gear 71, a second gear 72, and a transfer shaft 73. The connection mechanism 12 is a reduction mechanism that reduces the speed of rotation inputted to the first gear 71 and outputs the rotation from the second gear 72. Note that the connection mechanism 12 may be, for example, an increase mechanism that increases the speed of rotation inputted to the first gear 71 and outputs the rotation from the second gear 72, or a mechanism that does not perform speed reduction or speed increase. The connection mechanism 12 is also referred to as a coupling mechanism or a power transfer mechanism. The connection mechanism 12 is an example of a second gear mechanism.

The transfer shaft 73 is disposed so as to be spaced apart from and parallel to the motor shaft 11b of the motor 11. The transfer shaft 73 is supported by the drive housing 101 so as to be rotatable about a central axis Ax3. The central axis Ax3 is arranged so as to be parallel to the central axis Ax2 and spaced from the central axis Ax2. Specifically, the transfer shaft 73 is rotatably supported by two supporting parts 101a and 101b of the drive housing 101 with two bearings B3 and B4 therebetween. The two supporting parts 101a and 101b are arranged in the X-direction with spacing therebetween. Thus, the two bearings B3 and B4 are also arranged in the X-direction with spacing therebetween. The supporting part 101a and the bearing B3 are located in the X-direction of the supporting part 101b and the bearing B4. The two supporting parts 101a and 101b are cylindrical surface portions of the drive housing 101 that overlap the bearings B3 and B4, respectively. The supporting part 101a is included in the cover member 94, and the supporting part 101b is included in the base member 102. Thus, the bearing B3 is provided in the cover member 94, and the bearing B4 is provided in the base member 102. The bearings B3 and B4 are an example of transfer shaft bearings.

The first gear 71 is fixed to the motor shaft 11b of the motor 11, and rotates about the central axis Ax2 together with the motor shaft 11b.

The second gear 72 is fixed to the transfer shaft 73, and rotates about the central axis Ax3 together with the transfer shaft 73. The second gear 72 is provided between the two supporting parts 101a and 101b on the transfer shaft 73 of the drive housing 101.

The power transfer housing 201 of the power transfer unit 200 includes a differential gear housing 202 and a transmission housing 24 which will be described later. The transmission housing 24 is also referred to as a transmission case.

The differential gear housing 202 has two mating surfaces 202a and 202b. The mating surface 202a is an edge surface in the X-direction, i.e., the front direction, and faces in the X-direction. The mating surface 202a overlaps the mating surface 91b of the axle case 10. The mating surface 202b is an edge surface in the opposite direction to the X-direction, i.e., the rear direction, and faces in the opposite direction to the X-direction. The mating surface 202b is included in a partition 202c of the differential gear housing 202. The mating surfaces 202a and 202b are planar. The mating surface 202b is an example of a first mating surface.

The differential gear housing 202 is fixed to the base member 91 by coupling devices such as screws or bolts on an opposite direction side to the X-direction, i.e., the rear-direction side, of the base member 91 of the axle case 10, with the differential gear housing 202 overlapping the base member 91. The differential gear housing 202 is provided with a part of the accommodating room that accommodates the differential gear 14, etc.

The transmission 13 is disposed on an opposite side of a ring gear 52 and the central axis Ax1 of rotation of the drive shafts 15L and 15R from the motor 11. Namely, the central axis Ax1 is located between the motor 11 and the transmission 13. More specifically, the motor 11 and the transmission 13 are arranged in the vehicle front-rear direction with the central axis Ax1 therebetween.

The transmission 13 includes a gear mechanism 29 and the transmission housing 24. The gear mechanism 29 includes an input shaft 21, an output shaft 22, a plurality of gears 30, and a gear connection mechanism 23. The gear mechanism 29 is accommodated in the transmission housing 24. The transmission 13 is configured to, for example, reduce the speed of rotation (power) inputted to the input shaft 21 and increase the speed of rotation (power) inputted to the input shaft 21. Note that the transmission 13 may be configured to perform only speed reduction or may be configured to perform only speed increase. Namely, the transmission 13 may be configured to perform at least one of speed reduction and speed increase. The gear mechanism 29 is an example of a first gear mechanism, and the transmission housing 24 is an example of a gear housing.

The transmission housing 24 has a mating surface 24a. The mating surface 24a is an edge surface in the X-direction, i.e., the front direction, and faces in the X-direction. The mating surface 24a overlaps the mating surface 202b of the differential gear housing 202. The mating surface 24a is an example of a second mating surface.

The transmission housing 24 is supported (fixed) by the axle case 10. Specifically, the transmission housing 24 is supported (fixed) by the axle case 10 with the differential gear housing 202 therebetween. The transmission housing 24 is detachably mounted on the differential gear housing 202 by screws, etc. Namely, the transmission 13 is detachably mounted on the axle case 10.

In addition, the transmission housing 24 includes a plurality of members. Specifically, the transmission housing 24 includes a first housing member 25 including the mating surface 24a, and a second housing member 26 located on an opposite direction side to the X-direction of the first housing member 25 and fixed to the first housing member 25. The first housing member 25 is formed in cylindrical shape open at both ends. The first housing member 25 has a mating surface 25a in addition to the mating surface 24a. The mating surface 25a is an edge surface in the opposite direction to the X-direction, i.e., the rear direction, and faces in the opposite direction to the X-direction. The mating surface 25a is planar. The first housing member 25 accommodates at least one gear 30. The second housing member 26 is formed in bottomed cylindrical shape open in the X-direction. The second housing member 26 has a mating surface 26a. The mating surface 26a is an edge surface in the X-direction, i.e., the front direction, and faces in the X-direction. The mating surface 26a is planar. The mating surface 26a overlaps the mating surface 25a of the first housing member 25. The second housing member 26 accommodates the parking lock gear 17.

The input shaft 21 and the output shaft 22 are disposed so as to be spaced apart from each other and parallel to each other. The input shaft 21 is supported by the power transfer housing 201 so as to be rotatable about the central axis Ax3. The central axis Ax3 extends in a direction orthogonal to (intersecting) the central axis Ax1. Specifically, the input shaft 21 is rotatably supported by supporting parts 201a and 201b of the power transfer housing 201 with two bearings B5 and B6 therebetween. The supporting parts 201a and 201b are arranged in the X-direction with spacing therebetween. Thus, the two bearings B5 and B6 are also arranged in the X-direction with spacing therebetween. The supporting part 201a and the bearing B5 are located in the X-direction of the supporting part 201b and the bearing B6. The two supporting parts 201a and 201b are cylindrical surface portions of the power transfer housing 201 that overlap the bearings B5 and B6, respectively. The supporting part 201a is included in the differential gear housing 202, and the supporting part 201b is included in the transmission housing 24. Thus, the bearing B5 is provided in the differential gear housing 202, and the bearing B6 is provided in the transmission housing 24. As such, the two bearings B5 and B6 are supported by the power transfer housing 201. Namely, the input shaft 21 is rotatably supported by the power transfer housing 201 with the two bearings B5 and B6 therebetween. More specifically, the bearing B5 is supported by the differential gear housing 202 by fitting into an opening part 202d provided in the partition 202c of the differential gear housing 202. The bearing B6 is supported by the transmission housing 24. The input shaft 21 is inserted into the opening part 202d and passes through the opening part 202d. The bearings B5 and B6 are an example of input shaft bearings.

The output shaft 22 is supported by the transmission housing 24 so as to be rotatable about a central axis Ax4. The central axis Ax4 extends in a direction orthogonal to (intersecting) the central axis Ax1. The central axis Ax4 is arranged so as to be parallel to the central axis Ax3 and spaced from the central axis Ax3. Specifically, the output shaft 22 is rotatably supported by two bearings B7 and B8.

The two bearings B7 and B8 are arranged in the X-direction with spacing therebetween. The bearing B7 is located in the X-direction of the bearing B8. The bearing B7 is one of the two bearings B7 and B8 closer to the differential gear 14. The two bearings B7 and B8 are supported by the power transfer housing 201. Namely, the input shaft 21 is rotatably supported by the power transfer housing 201 with the two bearings B7 and B8 therebetween. More specifically, the bearing B7 is supported by the differential gear housing 202 by fitting into an opening part 202e provided in the partition 202c of the differential gear housing 202. The bearing B8 is supported by the transmission housing 24. The output shaft 22 is inserted into the opening part 202e and passes through the opening part 202e. Here, the opening part 202d and the opening part 202e are spaced apart from each other. In addition, the opening part 202d and the opening part 202e are spaced apart from the opening part 94a. The central axes Ax1 to Ax4 are also referred to as the axes of rotation. The bearings B7 and B8 are an example of output shaft bearings.

Power of the motor 11 is inputted to the input shaft 21 through the connection mechanism 12, and the input shaft 21 rotates by the power.

The plurality of gears 30 each are a constant mesh gear and are provided across the input shaft 21 and the output shaft 22. The plurality of gears 30 have different gear ratios (a gear ratio = the number of rotations of the input shaft 21/the number of rotations of the output shaft 22). The gear 30 is also referred to as a gear pair. The gear ratio is also referred to as a transmission gear ratio.

The plurality of gears 30 include a 1st gear 31 and a 2nd gear 32. The 1st gear 31 and the 2nd gear 32 are disposed in an axial direction of the central axis Ax2 of the input shaft 21 so as to be spaced from each other. The gear ratio of the 2nd gear 32 is relatively smaller than the gear ratio of the 1st gear 31. The 1st gear 31 forms a reduction mechanism 41 with the input shaft 21 and the output shaft 22. The reduction mechanism 41 reduces the speed of rotation inputted to the input shaft 21 and outputs the rotation from the output shaft 22. The 2nd gear 32 forms an increase mechanism 42 with the input shaft 21 and the output shaft 22. The increase mechanism 42 increases the speed of rotation inputted to the input shaft 21 and outputs the rotation from the output shaft 22. In addition, the reduction mechanism 41 and the increase mechanism 42 are supported by the axle case 10 with the transmission housing 24 and the differential gear housing 202 therebetween. The 1st gear 31 is also referred to as a low gear, and the 2nd gear 32 is also referred to as a high gear. Note that the configuration of the plurality of gears 30 is not limited to that described above. For example, both of the 1st gear 31 and the 2nd gear 32 may be reduction mechanisms, or both of the 1st gear 31 and the 2nd gear 32 may be increase mechanisms.

The 1st gear 31 includes a drive gear 33 and a driven gear 34 that mesh together, and the 2nd gear 32 includes a drive gear 35 and a driven gear 36 that mesh together. Namely, the transmission 13 includes the plurality of drive gears 33 and 35 and the plurality of driven gears 34 and 36. The drive gear 33 is an example of an input gear, and the driven gear 34 is an example of an output gear.

The drive gears 33 and 35 are fixed to the input shaft 21 and rotate about the central axis Ax3 together with the input shaft 21. Namely, the drive gears 33 and 35 are provided on the input shaft 21. The drive gears 33 and 35 are provided between the two supporting parts 201a and 201b on the input shaft 21 of the power transfer housing 201.

The driven gears 34 and 36 are supported by the output shaft 22 with bearings (not shown) therebetween so as to be rotatable relative to the output shaft 22, and rotate about the central axis Ax4. Namely, the driven gears 34 and 36 are provided on the output shaft 22. The driven gears 34 and 36 can spin on the output shaft 22 in a state in which the driven gears 34 and 36 are not connected to the output shaft 22 by the gear connection mechanism 23. In addition, the driven gears 34 and 36 are limited in their movement in an axial direction of the central axis Ax4.

In addition, the output shaft 22 is provided with a final gear 38. The final gear 38 is fixed to the output shaft 22 and rotates about the central axis Ax4 together with the output shaft 22.

The gear connection mechanism 23 is provided between the driven gear 34 of the 1st gear 31 and the driven gear 36 of the 2nd gear 32. The gear connection mechanism 23 selectively switches between a connected state (coupled state) and a disconnected state (non-coupled state) between the output shaft 22 and the driven gear 34 of the 1st gear 31 and the driven gear 36 of the 2nd gear 32. Namely, the gear connection mechanism 23 switches between the states of transfer of rotation between the output shaft 22 and the driven gears 34 and 36. The gear connection mechanism 23 is also referred to as a switching mechanism or a selection mechanism.

The gear connection mechanism 23 includes a hub 43 and a sleeve 44. The hub 43 is coupled to the output shaft 22 and rotates about the central axis Ax4 together with the output shaft 22. The sleeve 44 is coupled to the hub 43 by spline coupling and rotates about the central axis Ax4 together with the hub 43, and can move in an axial direction of the output shaft 22 relative to the hub 43. Namely the sleeve 44 rotates about the central axis Ax4 together with the output shaft 22, and can move in the axial direction of the output shaft 22 relative to the output shaft 22.

The sleeve 44 is configured to be movable between a first coupling position in which the sleeve 44 is coupled to the driven gear 34, a second coupling position in which the sleeve 44 is coupled to the driven gear 36, and a neutral position between the first coupling position and the second coupling position (FIG. 2). By an actuator and a movement mechanism which are not shown, the sleeve 44 is selectively located in any of the first coupling position with the driven gear 34, the second coupling position with the driven gear 36, and the neutral position. In a state in which the sleeve 44 is located in the first coupling position with the driven gear 34, the output shaft 22 and the driven gear 34 can rotate together. In this case, there is formed a transfer path for first-gear rotation from the motor shaft 11b of the motor 11 to the drive shafts 15L and 15R through the connection mechanism 12, the drive gear 33, the driven gear 34, the output shaft 22, the final gear 38, and the differential gear 14.

In addition, in a state in which the sleeve 44 is located in the second coupling position with the driven gear 36, the output shaft 22 and the driven gear 36 can rotate together. In this case, there is formed a transfer path for second-gear rotation from the motor shaft 11b of the motor 11 to the drive shafts 15L and 15R through the connection mechanism 12, the drive gear 35, the driven gear 36, the output shaft 22, the final gear 38, and the differential gear 14.

In a state in which the sleeve 44 is located in the neutral position, the driven gears 34 and 36 can spin on the output shaft 22.

The differential gear 14 includes a differential gear case 51, the ring gear 52, and a differential mechanism (not shown).

The differential gear case 51 is accommodated in the differential gear housing 202. The differential gear case 51 is supported by the differential gear housing 202 with bearings B9 and B10 therebetween so as to be rotatable about the central axis Ax1. In such a configuration, the differential gear 14 is rotatably supported by the axle case 10 with the power transfer housing 201 therebetween.

The ring gear 52 is fixed to the differential gear case 51, and rotates about the central axis Ax1 together with the differential gear case 51. Namely, the ring gear 52 is supported by the differential gear housing 202 with the bearing B7 therebetween so as to be rotatable about the central axis Ax1. In addition, the ring gear 52 meshes with the final gear 38, and power is transferred to the ring gear 52 from the final gear 38. The final gear 38 and the ring gear 52 form a reduction gear ratio (so-called final reduction ratio).

The differential mechanism is accommodated in the differential gear case 51. The differential mechanism includes a pinion shaft, two pinion gears, and two side gears. The pinion shaft extends in a direction orthogonal to the central axis Ax1. The pinion shaft is supported by the differential gear case 51. The pinion gears are supported by the pinion shaft so as to be rotatable about the pinion shaft. The pinion shaft and the pinion gears rotate about the central axis Ax1 together with the differential gear case 51. The two side gears mesh with the two pinion gears, with the two side gears fixed to end parts of the two drive shafts 15L and 15R, respectively.

In the differential gear 14 having the above-described configuration, when the ring gear 52 rotates, the differential gear case 51 rotates together with the pinion shaft. The pinion shaft allows the pinion gears to revolve about the central axis Ax1. By this, the side gears rotate about the central axis Ax1 and the drive shafts 15L and 15R rotate. When differential rotation occurs in the side gears, the pinion gears rotate about the pinion shaft, thereby smoothing out the differential rotation.

The power transfer unit 200 having the above-described configuration includes a combination of a plurality of units. Specifically, the power transfer unit 200 includes a differential gear unit 203 and a gear unit 204.

The differential gear unit 203 includes the differential gear 14 and the differential gear housing 202. The gear unit 204 includes the transmission 13 (the reduction mechanism 41, the increase mechanism 42, and the transmission housing 24). The gear unit 204 is detachably mounted on the differential gear unit 203.

In addition, the transfer shaft 73 and the input shaft 21 of the transmission 13 are disposed on the same straight line, and are coupled together by a coupling part 80. The transfer shaft 73, the input shaft 21, and the coupling part 80 compose a through drive shaft 81 that transfers power between the motor 11 and the transmission 13. In other words, the transfer shaft 73, the input shaft 21, and the coupling part 80 form the through drive shaft 81. The through drive shaft 81 is rotatable about the central axis Ax3 and extends from the X-direction side (the front-direction side) of the axle case 10 to the opposite side to the X-direction (the rear-direction side) of the axle case 10, and power outputted from the motor shaft 11b is transferred to the through drive shaft 81. The through drive shaft 81 is accommodated in the axle case 10, and is supported by the axle case 10 with the bearings B3 to B6 therebetween so as to be rotatable about the central axis Ax3. The through drive shaft 81 is also referred to as a coupling shaft. One of the transfer shaft 73 and the input shaft 21 is also referred to as a first portion and the other is also referred to as a second portion.

The through drive shaft 81 extends in the X-direction, i.e., the vehicle front-rear direction, in a position spaced apart from the drive shaft 15R (the central axis Ax1), specifically, in the Z-direction, i.e., an upper side, of the central axis Ax1. Therefore, the through drive shaft 81 overlaps (intersects) the central axis Ax1 as viewed from the top. Note that the through drive shaft 81 may be provided above the drive shaft 15L or the differential gear 14, or may be provided below the drive shaft 15R, the drive shaft 15L, or the differential gear 14.

The coupling part 80 separably couples together the transfer shaft 73 and the input shaft 21. The coupling part 80 is accommodated in the differential gear housing 202. The coupling part 80 is located closer to the drive gear 33 of the reduction mechanism 41 in the transmission 13 out of the second gear 72 of the connection mechanism 12 and the drive gear 33. The coupling part 80 is located in the rear of the drive shaft 15R as viewed from the top. Note that the position of the coupling part 80 is not limited to that described above.

The coupling part 80, for example, couples via splines the transfer shaft 73 and the input shaft 21 together. Specifically, the coupling part 80 includes a male spline part 80a provided on the input shaft 21; and a female spline part 80b provided on the transfer shaft 73 and coupled via splines to the male spline part 80a. In such a configuration, by allowing the transfer shaft 73 and the input shaft 21 to be spaced apart from each other in an axial direction of the central axis Ax3, the transfer shaft 73 and the input shaft 21 can be separated from each other, and by allowing the transfer shaft 73 and the input shaft 21 to come close to each other in the axial direction of the central axis Ax3, the transfer shaft 73 and the input shaft 21 can be coupled together. Note that the coupling part 80 may separably couple together the transfer shaft 73 and the input shaft 21 by coupling devices such as screws or bolts.

In the present embodiment, when a distance between two portions 73a and 73b of the transfer shaft 73 that are supported by the two supporting parts 101a and 101b of the drive housing 101 with the two bearings B3 and B4 therebetween (a distance in the axial direction of the central axis Ax3) and a distance between two portions 21a and 21b of the input shaft 21 that are supported by the two supporting parts 201a and 201b of the power transfer housing 201 with the two bearings B3 and B4 therebetween (a distance in the axial direction of the central axis Ax3) each are a first distance, the input shaft 21 has a longer first distance than the transfer shaft 73. The portions 73a and 73b of the transfer shaft 73 have cylindrical surfaces that overlap the bearings B3 and B4, respectively, and the portions 21a and 21b of the input shaft 21 have cylindrical surfaces that overlap the bearings B5 and B6, respectively. Note that the transfer shaft 73 may have a longer first distance than the input shaft 21.

In addition, the parking brake 16 and the parking lock gear 17 are connected to the output shaft 22 of the transmission 13.

In addition, in the present embodiment, the motor 11 and the transmission 13 (the reduction mechanism 41 and the increase mechanism 42) are disposed on opposite sides to each other relative to the ring gear 52 and the central axis Ax1 of rotation of the drive shafts 15L and 15R. Namely, the central axis Ax1 is located between the motor 11 and the transmission 13 (the reduction mechanism 41 and the increase mechanism 42). More specifically, the motor 11 and the transmission 13 (the reduction mechanism 41 and the increase mechanism 42) are arranged in the vehicle front-rear direction with the central axis Ax1 therebetween.

In the electric drive device for a vehicle 1 having the above-described configuration, power outputted from the motor shaft 11b of the motor 11 is inputted to the input shaft 21 of the transmission 13 through the connection mechanism 12. The power inputted to the transmission 13 is inputted to the ring gear 52 of the differential gear 14 through a selected one of the plurality of gears 30 (the 1st gear 31 or the 2nd gear 32). The power inputted to the ring gear 52 is inputted to the drive shafts 15L and 15R through the differential mechanism.

As described above, in the present embodiment, the electric drive device for a vehicle 1 includes the axle case 10, the drive shafts 15L and 15R, the motor 11, the through drive shaft 81, the reduction mechanism 41 and the increase mechanism 42 (first gear mechanism), the differential gear 14, the drive unit 100, and the power transfer unit 200. The drive shafts 15L and 15R are accommodated in the axle case 10 and are rotatable about the central axis Ax1 (first central axis). The motor 11 is located on an X-direction (first direction) side intersecting the axial direction of the central axis Ax1, relative to the axle case 10. The motor 11 has the motor shaft 11b that rotates about the central axis Ax2 (second central axis) extending in the X-direction. The through drive shaft 81 includes the transfer shaft 73, at least a part of which is located on the X-direction side relative to the axle case 10 and to which power is inputted from the motor shaft 11b; the input shaft 21, at least a part of which is located on an opposite direction side to the X-direction relative to the axle case 10; and the coupling part 80 that couples together the transfer shaft 73 and the input shaft 21, and the through drive shaft 81 is rotatable about the central axis Ax3 (third central axis) extending in the X-direction. The reduction mechanism 41 and the increase mechanism 42 include the input shaft 21, the output shaft 22 that is rotatable about the central axis Ax4 (fourth central axis) arranged so as to be parallel to the central axis Ax3 (third central axis) and spaced from the central axis Ax3, and the plurality of drive gears 33 and 35 and driven gears 34 and 36 (gears) that are interposed between the input shaft 21 and the output shaft 22 and transfer power. The differential gear 14 is accommodated in the axle case 10 and coupled to the drive shafts 15L and 15R and the output shaft 22, and transfers power from the output shaft 22 to the drive shafts 15L and 15R. The drive unit 100 is detachably mounted on the axle case 10 and extends in the X-direction from the axle case 10. The power transfer unit 200 is detachably mounted on the axle case 10 and extends in an opposite direction to the X-direction from the axle case 10. The drive unit 100 includes the motor 11 and the transfer shaft 73. The power transfer unit 200 includes the differential gear unit 203 and the gear unit 204. The differential gear unit 203 includes the differential gear 14; and the differential gear housing 202 that is located on the opposite direction side to the X-direction relative to the axle case 10, and has the mating surface 202b (first mating surface) facing in the opposite direction to the X-direction, and accommodates the differential gear 14. The gear unit 204 includes the reduction mechanism 41 and the increase mechanism 42; and the transmission housing 24 (gear housing) that is located on the opposite direction side to the X-direction relative to the differential gear housing 202, and has the mating surface 24a (second mating surface) coupled to the mating surface 202b, and accommodates the reduction mechanism 41 and the increase mechanism 42, and the gear unit 204 is detachably mounted on the differential gear unit 203.

According to such a configuration, for example, even when there are a plurality of types of specifications for the gear unit 204, differential gear units 203 of the same configuration can be used for the gear units 204 having the plurality of specifications. Namely, there is no need to change the differential gear housing 202 of the differential gear unit 203. Thus, comparing to a case of changing the entire power transfer housing 201 of the power transfer unit 200 for each of the gear units 204 having a plurality of specifications, an increase in the cost of the electric drive device for a vehicle 1 can be suppressed. In addition, replacement of the gear unit 204 is easily done. Namely, a problem about making replacement of the gear unit 204 easy can be solved.

In addition, in the present embodiment, the differential gear unit 203 is supported by the differential gear housing 202 and has the bearing B7 (output shaft bearing) that rotatably supports the output shaft 22.

According to such a configuration, while a meshed state of the differential gear 14 is maintained, the differential gear unit 203 and the gear unit 204 can be divided.

In addition, in the present embodiment, the differential gear unit 203 is supported by the differential gear housing 202 and has the bearing B5 (input shaft bearing) that rotatably supports the through drive shaft 81.

According to such a configuration, a configuration (the partition 202c) for supporting the bearing B5 and a configuration (the partition 202c) for supporting the bearing B7 can be made common.

In addition, in the present embodiment, the electric drive device for a vehicle 1 includes the through drive shaft 81 and the drive unit 100. The through drive shaft 81 includes the transfer shaft 73, at least a part of which is located on the X-direction side relative to the axle case 10, and to which power is inputted from the motor shaft 11b; the input shaft 21, at least a part of which is located on the opposite direction side to the X-direction relative to the axle case 10; and the coupling part 80 that couples together the transfer shaft 73 and the input shaft 21, and the through drive shaft 81 is rotatable about the central axis Ax3 (third central axis) extending in the X-direction. The drive unit 100 includes the motor 11 and the transfer shaft 73, and is detachably mounted on the axle case 10 and extends in the X-direction from the axle case 10.

According to such a configuration, the drive unit 100 can be attached to and detached from the axle case 10.

In addition, in the present embodiment, the drive unit 100 includes the connection mechanism 12 (second gear mechanism) including the first gear 71 that rotates together with the motor shaft 11b; the transfer shaft 73; and the second gear 72 to which power is transferred from the first gear 71 and which rotates together with the transfer shaft 73.

According to such a configuration, comparing to a configuration in which the motor shaft 11b and the input shaft 21 are arranged coaxially and coupled together, the flexibility in disposition of the motor 11 is high.

In addition, in the present embodiment, the coupling part 80 includes the male spline part 80a provided on one of the transfer shaft 73 and the input shaft 21 (for example, the input shaft 21); and the female spline part 80b provided on the other one of the transfer shaft 73 and the input shaft 21 (for example, the transfer shaft 73), and coupled via splines to the male spline part 80a.

According to such a configuration, coupling between the transfer shaft 73 and the input shaft 21 can be relatively easily performed.

In addition, in the present embodiment, the motor 11 and the transmission 13 are mounted on the axle case 10 independently of each other.

According to such a configuration, for example, the motor 11 and the transmission 13 can be independently attached to and detached from the axle case 10, and thus, comparing to a configuration in which a motor is mounted on an axle case with a transmission therebetween, replacement of the motor 11 and the transmission 13 is easily done. In addition, by unifying parts (mounting surfaces) of a plurality of motors 11 having different specifications (performances) where the axle case 10 is mounted, all motors 11 can be mounted on the axle case 10. In addition, by unifying parts (mounting surfaces) of a plurality of transmissions 13 having different specifications (performances) where the axle case 10 is mounted, all transmissions 13 can be mounted on the axle case 10. Thus, the number of combinations of the motor 11 and the transmission 13 is easily increased.

In addition, in the present embodiment, the motor 11 and the transmission 13 are located on opposite sides to each other relative to the axle case 10.

According to such a configuration, for example, comparing to a configuration in which a motor and a transmission are located on the same side relative to the axle case 10, working space for replacing the motor 11 and the transmission 13 is easily provided, and thus, replacement of the motor 11 and the transmission 13 is easily done. In addition, the weight balance of the electric drive device for a vehicle 1 improves.

In addition, according to the above-described configuration, the opening part 94a into which the motor shaft 11b of the motor 11 is inserted and the opening parts 202d and 202e into which the input shaft 21 and the output shaft 22 of the transmission 13 are inserted are easily provided in positions distant from each other. Thus, a reduction in the strength and stiffness of the electric drive device for a vehicle 1 is easily suppressed.

In addition, in the present embodiment, the opening parts 94a, 202d, and 202e are spaced apart from each other, and thus, comparing to a configuration in which the opening parts 94a, 202d, and 202e are formed as one opening part, a reduction in the strength and stiffness of the electric drive device for a vehicle 1 is easily suppressed.

In addition, in the present embodiment, the electric drive device for a vehicle 1 includes, for example, the through drive shaft 81. The through drive shaft 81 includes the transfer shaft 73 to which power is transferred from the motor 11; the input shaft 21 to which power is transferred from the transfer shaft 73; and the coupling part 80 that separably couples together the transfer shaft 73 and the input shaft 21, and the through drive shaft 81 transfers power between the motor 11 and the transmission 13.

According to such a configuration, the through drive shaft 81 can be separated into the transfer shaft 73 and the input shaft 21, and thus, replacement of the motor 11 and the transmission 13 is easily done.

### <Second Embodiment>

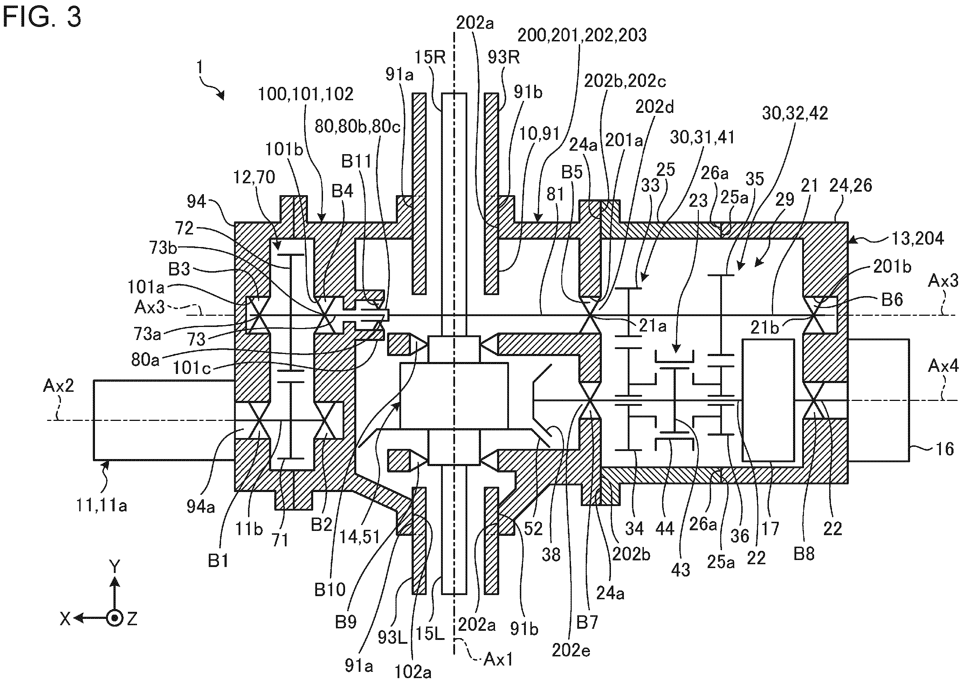

FIG. 3 is an illustrative diagram showing a schematic configuration of an electric drive device for a vehicle 1 of a second embodiment.

The present embodiment differs from the first embodiment in the coupling part 80. The coupling part 80 of the present embodiment is accommodated in the drive housing 101. In addition, the male spline part 80a is provided on the transfer shaft 73, and the female spline part 80b is provided on the input shaft 21.

In addition, the drive unit 100 has a bearing B11 that rotatably supports the coupling part 80. The bearing B 11 supports an outer circumference 80c of the female spline part 80b provided on the input shaft 21. The bearing B11 is supported by a supporting part 101c provided in the drive housing 101. Specifically, the supporting part 101c is provided in the base member 102. The bearing B11 is a different bearing than the bearings B3 to B6. The outside diameter of the bearing B11 is smaller than the outside diameters of the bearings B3 to B6. The bearing B11 is an example of a coupling part bearing.

In addition, in the present embodiment, as in the first embodiment, when a distance between the two portions 73a and 73b of the transfer shaft 73 that are supported by the two supporting parts 101a and 101b of the drive housing 101 (a distance in the axial direction of the central axis Ax3) and a distance between the two portions 21a and 21b of the input shaft 21 that are supported by the two supporting parts 201a and 201b of the power transfer housing 201 (a distance in the axial direction of the central axis Ax3) each are a first distance, the input shaft 21 has a longer first distance than the transfer shaft 73. The input shaft 21 extends toward the transfer shaft 73, crossing the central axis Ax1. In other words, the input shaft 21 protrudes toward the input shaft 21 from the power transfer housing 201. Namely, the input shaft 21 intersects (for example, is orthogonal to) the central axis Ax1 as viewed in a direction (e.g., the Z-direction) orthogonal to the axial direction of the central axis Ax1 and the axial direction of the central axis Ax3. In addition, the coupling part 80 is accommodated in the drive housing 101. Note that the transfer shaft 73 may have a longer first distance than the input shaft 21, and the transfer shaft 73 may extend toward the input shaft 21, crossing the central axis Ax1. In this case, the coupling part 80 is accommodated in the power transfer housing 201.

As described above, in the present embodiment, when a distance between the two portions 73a and 73b of the transfer shaft 73 that are supported by the two supporting parts 101a and 101b of the drive housing 101 and a distance between the two portions 21a and 21b of the input shaft 21 that are supported by the two supporting parts 201a and 201b of the power transfer housing 201 each are a first distance, one of the input shaft 21 and the transfer shaft 73 that has a longer first distance is one shaft (for example, the input shaft 21), the other one of the input shaft 21 and the transfer shaft 73 that has a shorter first distance is the other shaft (for example, the transfer shaft 73), one of the drive housing 101 and the power transfer housing 201 that supports the one shaft (for example, the input shaft 21) is one housing (for example, the power transfer housing 201), and the other one of the drive housing 101 and the power transfer housing 201 that supports the other shaft (for example, the transfer shaft 73) is the other housing (for example, the drive housing 101), the one shaft (for example, the input shaft 21) extends toward the other shaft (for example, the transfer shaft 73), crossing the central axis Ax1, and the coupling part 80 is accommodated in the drive housing 101.

According to such a configuration, comparing to a configuration in which the other shaft with a shorter first distance (for example, the transfer shaft 73) extends toward the one shaft with a longer first distance (for example, the input shaft 21), crossing the central axis Ax1, and the coupling part 80 is accommodated in the one housing (for example, the power transfer housing 201), swing of an end part on a coupling part 80 side of the one shaft with a longer first distance (for example, the input shaft 21) is easily suppressed. Namely, the effect of suppressing swing occurring in the coupling part 80 due to rotation of the through drive shaft 81 is high. Thus, occurrence of vibration in the through drive shaft 81, eventually, the electric drive device for a vehicle 1, is easily suppressed.

In addition, in the present embodiment, the drive unit 100 includes a second gear 72 mechanism including the single gear 70 including the first gear 71 that rotates together with the motor shaft 11b, the transfer shaft 73, and the second gear 72 to which power is transferred from the first gear 71 and which rotates together with the transfer shaft 73. The gear mechanism 29 includes the plurality of gears 30. The one shaft is the input shaft 21 and the one housing is the power transfer housing 201.

According to such a configuration, the weight balance in the vehicle front-rear direction is excellent.

In addition, in the present embodiment, the plurality of gears 30 in the gear mechanism 29 (first gear mechanism) include the plurality of drive gears 33 and 35 provided on the input shaft 21; and the plurality of driven gears 34 and 36 to which power is transferred from the plurality of drive gears 33 and 35, and which are provided on the output shaft 22. The electric drive device for a vehicle 1 includes the plurality of drive gears 33 and 35 between the two supporting parts 201a and 201b on the input shaft 21 of the power transfer housing 201. The electric drive device for a vehicle 1 includes the second gear 72 between the two supporting parts 101a and 101b on the transfer shaft 73 of the drive housing 101.

In addition, in the present embodiment, the coupling part 80 is supported by the other housing (for example, the drive housing 101).

According to such a configuration, swing of an end part on a coupling part 80 side of the one shaft with a longer first distance (for example, the input shaft 21) is more easily suppressed.

In addition, in the present embodiment, the coupling part 80 includes the female spline part 80b provided on the one shaft (for example, the input shaft 21) and the male spline part 80a provided on the other shaft (for example, the transfer shaft 73) and coupled via splines to the female spline part 80b, and the bearing B 11 (coupling part bearing) is provided between the outer circumference 80c of the female spline part 80b and the other housing (for example, the drive housing 101).

According to such a configuration, swing of the end part on the coupling part 80 side of the one shaft with a longer first distance (for example, the input shaft 21) is more easily suppressed.

In addition, in the present embodiment, the two supporting parts 101a and 101b of the drive housing 101 support the transfer shaft 73 with the bearings B3 and B4 (transfer shaft bearings) therebetween, respectively, so as to be rotatable about the central axis Ax3. The two supporting parts 201a and 201b of the power transfer housing 201 support the input shaft 21 with the bearings B5 and B6 (input shaft bearings) therebetween, respectively, so as to be rotatable about the central axis Ax3. The coupling part 80 is supported by the other housing (for example, the drive housing 101) with the bearing B11 (coupling part bearing) therebetween. The bearing B11 is smaller in outside diameter than the bearings B3 and B4 and the bearings B5 and B6.

A load applied to a shaft supporting part of the bearing B11 which is provided to suppress swing is small compared to the bearings B3 and B4 and the bearings B5 and B6 which are provided to support rotation of the transfer shaft 73 and the input shaft 21, and thus, the diameter of the bearing B11 can be reduced. By this, the radial size of a portion of the drive unit 100 near the coupling part 80 can be shrunk.

In addition, in the present embodiment, the drive unit 100 includes the drive housing 101 that accommodates the motor 11 and the transfer shaft 73, and the coupling part 80 is accommodated in the drive housing 101.

According to such a configuration, the transfer shaft 73 of the through drive shaft 81 is easily shortened. Thus, swing of the transfer shaft 73 is easily suppressed.

In addition, in the present embodiment, the electric drive device for a vehicle 1 has the bearing B11 (coupling part bearing) that rotatably supports the coupling part 80.

According to such a configuration, even when the spacing between the coupling part 80 and the bearing B5 that supports the input shaft 21 is relatively long, swing of an end part (front end part) of the input shaft 21 that is supported by the coupling part 80 is easily suppressed. Note that the bearing B11 may be applied to the first embodiment.

In addition, in the present embodiment, the diameter of the bearing B11 (coupling part bearing) is smaller than the diameter of the bearing B5 (input shaft bearing).

According to such a configuration, the space where the bearing B11 is disposed is reduced compared to a case in which the diameter of the bearing B11 is greater than or equal to the diameter of the bearing B5.

In addition, in the present embodiment, the coupling part 80 includes the male spline part 80a provided on the transfer shaft 73, and the female spline part 80b provided on the input shaft 21 and coupled via splines to the male spline part 80a.

According to such a configuration, the effect of preventing swing of the input shaft 21 is higher.

Note that the male spline part 80a may be provided on the input shaft 21, the female spline part 80b may be provided on the transfer shaft 73, and the female spline part 80b on the transfer shaft 73 may be supported by the bearing B11. In this case, even in a state in which the bearing B11 is installed, the input shaft 21 can be easily coupled to the transfer shaft 73.

Note that although the above-described embodiments show an example in which the motor 11 and the transmission 13 are located on opposite sides to each other relative to the axle case 10, the configuration is not limited thereto. For example, the motor 11 and the transmission 13 may be located on the same side relative to the axle case 10. In this case, the motor 11 and the transmission 13 may be arranged in the vehicle width direction or may be arranged in the up-down direction.

In addition, although each of the above-described embodiments shows an example in which the first gear mechanism is the reduction mechanism 41 and the increase mechanism 42, the configuration is not limited thereto. For example, the first gear mechanism may include only one reduction mechanism 41 or only one increase mechanism 42. Namely, the first gear mechanism may be configured not to be able to select a gear 30. In addition, the first gear mechanism may have a configuration in which the number of rotations of the input shaft 21 is identical to the number of rotations of the output shaft 22, i.e., a configuration in which speed reduction or speed increase is not performed.

In addition, the motor shaft 11b and the transfer shaft 73 may not be different shafts, but may be an integral shaft. Namely, the motor shaft 11b and the transfer shaft 73 may be coaxially and integrally provided without the gear 70 therebetween.

In addition, the differential gear 14 may be rotatably supported by the axle case 10 without the power transfer housing 201 therebetween.

Although the embodiments of the present invention are described above, the above-described embodiments are merely examples, and are not intended to limit the scope of the invention. The above-described new embodiments can be implemented in various modes, and various omissions, substitutions, or changes can be made without departing from the spirit of the invention. In addition, the above-described embodiments are included in the scope and spirit of the invention and included in inventions described in the claims and in the range of equivalency thereof.

### REFERENCE SIGNS LIST

1: Electric drive device for a vehicle, 10: Axle case, 11: Motor, 11b: Motor shaft, 12: Connection mechanism (second gear mechanism), 14: Differential gear, 15L, 15R: Drive shaft, 21: Input shaft, 21a, 21b: Portion, 22: Output shaft, 24: Transmission housing (gear housing), 24a: Mating surface (second mating surface), 29: Gear mechanism (first gear mechanism), 30: Gear, 33, 35: Drive gear (gear), 34, 36: Driven gear (gear), 70: Gear, 71: First gear, 72: Second gear, 73: Transfer shaft, 73a, 73b: Portion, 80: Coupling part, 80a: Male spline part, 80b: Female spline part, 80c: Outer circumference, 81: Through drive shaft, 100: Drive unit, 101: Drive housing, 101a, 101b: Supporting part, 200: Power transfer unit, 201: Power transfer housing, 201a, 201b: Supporting part, 202: Differential gear housing, 202b: Mating surface (first mating surface), 203: Differential gear unit, 204: Gear unit, Ax1: Central axis (first central axis), Ax2: Central axis (second central axis), Ax3: Central axis (third central axis), Ax4: Central axis (fourth central axis), B3, B4: Bearing (transfer shaft bearing), B5, B6: Bearing (input shaft bearing), B7: Bearing (output shaft bearing), and B11: Bearing (coupling part bearing).

## Claims

1. An electric drive device for a vehicle comprising:
an axle case;
a drive shaft that is accommodated in the axle case and is rotatable about a first central axis;
a motor that is located on a first direction side relative to the axle case and has a motor shaft that rotates about a second central axis extending in the first direction, the first direction side intersecting an axial direction of the first central axis;
a first gear mechanism including an input shaft, at least a part of which is located on an opposite direction side to the first direction relative to the axle case, and to which power is inputted from the motor shaft, the input shaft being rotatable about a third central axis extending in the first direction; an output shaft that is rotatable about a fourth central axis arranged so as to be parallel to the third central axis and spaced from the third central axis; and a plurality of gears that are interposed between the input shaft and the output shaft and that transfer the power;
a differential gear that is accommodated in the axle case and coupled to the drive shaft and the output shaft, and transfers the power from the output shaft to the drive shaft;
a through drive shaft including a transfer shaft, at least a part of which is located on the first direction side relative to the axle case, and to which power is inputted from the motor shaft; the input shaft; and a coupling part that couples together the transfer shaft and the input shaft, the through drive shaft being rotatable about a third central axis extending in the first direction;
a drive unit including the motor; the transfer shaft; and a drive housing that accommodates the motor and the transfer shaft and has two supporting parts that support the transfer shaft so as to be rotatable about the third central axis, the drive unit being detachably mounted on the axle case and extending in the first direction from the axle case; and
a power transfer unit including the first gear mechanism; and a power transfer housing that accommodates the first gear mechanism and includes two supporting parts that support the input shaft so as to be rotatable about the third central axis, the power transfer unit being detachably mounted on the axle case and extending in an opposite direction to the first direction from the axle case,
wherein
when a distance between two portions of the transfer shaft supported by the two supporting parts of the drive housing and a distance between two portions of the input shaft supported by the two supporting parts of the power transfer housing each are a first distance, one of the input shaft and the transfer shaft that has a longer first distance is one shaft, an other one of the input shaft and the transfer shaft that has a shorter first distance is an other shaft, one of the drive housing and the power transfer housing that supports the one shaft is one housing, and an other one of the drive housing and the power transfer housing that supports the other shaft is an other housing, the one shaft extends toward the other shaft, crossing the first central axis, and the coupling part is accommodated in the other housing.

2. The electric drive device for a vehicle according to claim 1, wherein
the drive unit includes a second gear mechanism including a single gear including a first gear that rotates together with the motor shaft, the transfer shaft, and a second gear to which the power is transferred from the first gear and which rotates together with the transfer shaft,
the first gear mechanism includes a plurality of gears, and
the one shaft is the input shaft, and the one housing is the power transfer housing.

3. The electric drive device for a vehicle according to claim 2, wherein
the plurality of gears in the first gear mechanism include a plurality of drive gears provided on the input shaft; and a plurality of driven gears to which the power is transferred from the plurality of drive gears, and which are provided on the output shaft,
the electric drive device for a vehicle includes the plurality of drive gears between the two supporting parts on the input shaft of the power transfer housing, and
the electric drive device for a vehicle includes the second gear between the two supporting parts on the transfer shaft of the drive housing.

4. The electric drive device for a vehicle according to any one of claims 1 to 3, wherein the coupling part is supported by the other housing.

5. The electric drive device for a vehicle according to any one of claims 1 to 4, wherein
the coupling part includes a female spline part provided on the one shaft and a male spline part provided on the other shaft and coupled via splines to the female spline part, and
a coupling part bearing is provided between an outer circumference of the female spline part and the other housing.

6. The electric drive device for a vehicle according to claim 5, wherein
the two supporting parts of the drive housing support the transfer shaft with transfer shaft bearings between the two supporting parts and the transfer shaft, respectively, so as to be rotatable about the third central axis,
the two supporting parts of the power transfer housing support the input shaft with input shaft bearings between the two supporting parts and the input shaft, respectively, so as to be rotatable about the third central axis,
the coupling part is supported by the other housing with a coupling part bearing between the coupling part and the other housing, and
the coupling part bearing is smaller in outside diameter than the transfer shaft bearings and the input shaft bearings.
